# EUROPÄISCHE PATENTSCHRIFT

(11) **EP 3 257 033 B1**
(45) Veröffentlichungstag und Bekanntmachung des Hinweises auf die Patenterteilung: **17.08.2022**
(21) Anmeldenummer: 16701333.3
(22) Anmeldetag: 22.01.2016
(51) Int. Cl.: G08G 1/0968, G05D 1/02, H04W 4/00, H04W 8/00, B62D 15/02, G01C 21/36, G08G 1/14, H04L 67/12, H04W 4/021, H04W 4/44

(54) **VERFAHREN UND VORRICHTUNG ZUM BETREIBEN EINES PARKPLATZES**
METHOD AND DEVICE FOR OPERATING A PARKING SPACE
PROCÉDÉ ET DISPOSITIF D'EXPLOITATION D'UN PARC DE STATIONNEMENT

(30) Priorität: 12.02.2015 DE 102015202471
(43) Veröffentlichungstag der Anmeldung: 20.12.2017
(73) Patentinhaber: Robert Bosch GmbH, 70442 Stuttgart (DE)
(72) Erfinder: NORDBRUCH, Stefan, 70806 Kornwestheim (DE); MIELENZ, Holger, 73760 Ostfildern (DE)
(86) Internationale Anmeldenummer: PCT/EP2016/051324
(87) Internationale Veröffentlichungsnummer: WO 2016/128201

(56) Entgegenhaltungen:
- DE-A1-102004 032 346
- DE-A1-102010 033 215
- FR-A1- 2 539 888
- US-A1- 2001 019 309
- US-A1- 2011 130 894
- US-A1- 2014 207 369
- US-B1- 6 594 580

## Beschreibung

Die Erfindung betrifft ein Verfahren und eine Vorrichtung zum Betreiben eines Parkplatzes. Die Erfindung betrifft ferner ein Parksystem für Fahrzeuge sowie ein Computerprogramm.

### Stand der Technik

Die Offenlegungsschrift US 2011/130894 A1 beschreibt ein System zum Fernsteuern eines Fahrzeugs.

Die Offenlegungsschrift DE 10 2012 222 562 A1 zeigt ein System für bewirtschaftete Parkflächen zur Überführung eines Fahrzeugs von einer Startposition in eine Zielposition.

Bei einem vollautomatisierten (autonomen) sogenannten Valet Parking wird ein Fahrzeug von seinem Fahrer auf einer Abgabestelle, zum Beispiel vor einem Parkhaus geparkt und von da fährt das Fahrzeug selber in eine Parkposition / Parkbucht und wieder zurück zur Abgabestelle.

Für das Valet Parking müssen in der Regel eine Vielzahl an Informationen, also eine Vielzahl an Daten, an das Fahrzeug übertragen werden. Nachteilig kann sein, dass für eine Übertragung aller Informationen, die für das Erreichen der Parkposition benötigt werden, lange Wartezeiten des Fahrzeugs im Einfahrtbereich des Parkplatzes zu erwarten sind.

### Offenbarung der Erfindung

Die der Erfindung zugrunde liegende Aufgabe kann darin gesehen werden, ein effizientes Konzept zum Betreiben eines Parkplatzes bereitzustellen, welches es ermöglicht, Wartezeiten von Fahrzeugen auf einem Parkplatz zwecks einer Informationsübertragung zu verkürzen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Gemäß Anspruch 1 wird ein Verfahren zum Betreiben eines Parkplatzes bereitgestellt, innerhalb welchem mehrere Basisstationen angeordnet sind,
a) wobei eine Mindestdatenmenge von von einem Fahrzeug für seine Fahrt auf dem Parkplatz benötigte Daten derart ermittelt wird, dass das Fahrzeug basierend auf den der Mindestdatenmenge entsprechenden Daten eine Funkreichweite einer ersten Basisstation verlassen und in Funkreichweite einer zweiten Basisstation fahren kann,
b) wobei die erste Basisstation die ermittelte Mindestdatenmenge von Daten an das sich in Funkreichweite der ersten Basisstation befindende Fahrzeug sendet, so dass das Fahrzeug basierend auf den Daten die Funkreichweite der ersten Basisstation verlassen und in Funkreichweite der zweiten Basisstation fahren kann,
c) wobei das Ermitteln der Mindestdatenmenge basierend auf einer jeweiligen Sendeleistung der ersten und der zweiten Basisstation durchgeführt wird, wobei die jeweiligen Sendeleistungen basierend auf einer digitalen Sendeleistungskarte ermittelt werden, die angibt, wie hoch eine jeweilige Sendeleistung der Basisstationen ist,d) wobei Daten ermittelt werden, die das Fahrzeug für seine Fahrt auf dem Parkplatz von einer Startposition zu einer Zielposition benötigt, wobei die Daten der Mindestdatenmenge basierend auf den ermittelten Daten ermittelt werden, das heißt, dass von diesen Daten nur diejenigen Daten an das Fahrzeug gesendet werden, die das Fahrzeug für seine Fahrt von der ersten zur zweiten Basisstation benötigt,e) wobei die Daten ein oder mehrere Elemente der folgenden Gruppe von Daten umfassen: Trajektoriendaten, Kartendaten einer digitalen Karte des Parkplatzes, Fernsteuerungsdaten, Objektdaten von sich auf dem Parkplatz befindenden mobilen und/oder stationären Objekten, Landmarkendaten, Verkehrsdaten und Gefährdungsdaten.

Gemäß Anspruch 7 wird eine Vorrichtung zum Betreiben eines Parklatzes bereitgestellt, innerhalb welchem mehrere Basisstationen angeordnet sind, umfassend:
- einen Prozessor, der ausgebildet ist, eine Mindestdatenmenge von von einem Fahrzeug für seine Fahrt auf dem Parkplatz benötigte Daten, derart zu ermitteln, dass das Fahrzeug basierend auf den der Mindestdatenmenge entsprechenden Daten eine Funkreichweite einer ersten Basisstation verlassen und in Funkreichweite einer zweiten Basisstation fahren kann, und
- eine Steuerungseinrichtung zum Steuern der ersten Basisstation derart, dass die erste Basisstation die ermittelte Mindestdatenmenge von Daten an das sich in Funkreichweite der ersten Basisstation befindende Fahrzeug sendet, so dass das Fahrzeug basierend auf den Daten die

Funkreichweite der ersten Basisstation verlassen und in Funkreichweite der zweiten Basisstation fahren kann, wobei das Ermitteln der Mindestdatenmenge basierend auf einer jeweiligen Sendeleistung der ersten und der zweiten Basisstation durchgeführt wird, wobei die jeweiligen Sendeleistungen basierend auf einer digitalen Sendeleistungskarte ermittelt werden, die angibt, wie hoch eine jeweilige Sendeleistung der Basisstationen ist,- wobei Daten ermittelt werden, die das Fahrzeug für seine Fahrt auf dem Parkplatz von einer Startposition zu einer Zielposition benötigt, wobei die Daten der Mindestdatenmenge basierend auf den ermittelten Daten ermittelt werden, das heißt, dass von diesen Daten nur diejenigen Daten an das Fahrzeug gesendet werden, die das Fahrzeug für seine Fahrt von der ersten zur zweiten Basisstation benötigt,- wobei die Daten ein oder mehrere Elemente der folgenden Gruppe von Daten umfassen: Trajektoriendaten, Kartendaten einer digitalen Karte des Parkplatzes, Fernsteuerungsdaten, Objektdaten von sich auf dem Parkplatz befindenden mobilen und/oder stationären Objekten, Landmarkendaten, Verkehrsdaten und Gefährdungsdaten.

Gemäß Anspruch 8 wird ein Parksystem für Fahrzeuge bereitgestellt, welches einen Parkplatz umfasst, innerhalb welchem mehrere Basisstationen angeordnet sind, wobei das Parksystem ferner die Vorrichtung zum Betreiben eines Parkplatzes umfasst.

Gemäß Anspruch 9 wird ein Computerprogramm bereitgestellt, welches Programmcode zur Durchführung des Verfahrens zum Betreiben eines

Parkplatzes umfasst, wenn das Computerprogramm auf einem Computer ausgeführt wird.

Die Erfindung umfasst also insbesondere und unter anderem den Gedanken, dem Fahrzeug nur so viel an Daten zur Verfügung zu stellen, wie das Fahrzeug für eine Fahrt von der ersten zur zweiten Basisstation benötigt. Das heißt also, dass insbesondere nur so viel Daten an das Fahrzeug gesendet werden müssen, damit das Fahrzeug bis in Funkreichweite der zweiten Basisstation fahren kann. Denn dann kann es von der zweiten Basisstation weitere Daten erhalten oder empfangen, um basierend auf diesen Daten dann seine Fahrt auf dem Parkplatz fortzusetzen.

Das heißt also insbesondere, dass dadurch eine Aufenthaltszeit des Fahrzeugs innerhalb der Funkreichweite der ersten Basisstation verkürzt werden kann im Vergleich zu dem Fall, in welchem das Fahrzeug bereits sämtliche Daten vollständig übertragen bekommt, wenn es sich innerhalb der Funkreichweite der ersten Basisstation aufhält, wobei diese sämtlichen Daten für die vollständige Fahrt des Fahrzeugs auf dem Parkplatz benötigt werden. Sofern also die erste Basisstation in einem Einfahrtsbereich des Parkplatzes angeordnet ist, kann somit in vorteilhafter Weise eine Aufenthaltszeit des Fahrzeugs im Einfahrtsbereich verkürzt werden. Dadurch kann dann in vorteilhafter Weise eine Durchflussrate an Fahrzeugen, die den Einfahrtsbereich passieren können, gesteigert werden.

Eine Basisstation im Sinne der vorliegenden Erfindung bezeichnet insbesondere einen sogenannten "Access Point", der auch als ein drahtloser Zugangspunkt ("Wireless Access Point") bezeichnet werden kann. Ein solcher Access Point oder eine solche Basisstation bezeichnet insbesondere ein elektronisches Gerät, das als Schnittstelle für kabellose Kommunikationsgeräte fungiert. Endgeräte, insbesondere Endgeräte, wie sie zum Beispiel im Fahrzeug eingebaut sind, stellen insbesondere eine drahtlose Kommunikationsverbindung zur Basisstation her.

Das heißt also, dass zum Beispiel im Fahrzeug ein Endgerät integriert ist. Insbesondere umfasst das Fahrzeug ein solches Endgerät. Über das Endgerät stellt das Fahrzeug beispielsweise eine Kommunikationsverbindung zu einer Basisstation her.

Ein Parkplatz im Sinne der vorliegenden Erfindung kann auch als eine Parkfläche bezeichnet werden und dient als Abstellfläche für Fahrzeuge. Der Parkplatz bildet somit insbesondere eine zusammenhängende Fläche, die mehrere Stellplätze (bei einem Parkplatz auf privatem Grund) oder Parkstände (bei einem Parkplatz auf öffentlichem Grund) aufweist. Der Parkplatz kann nach einer Ausführungsform von einem Parkhaus umfasst sein. Insbesondere ist der Parkplatz von einer Garage umfasst.

Nach einer Ausführungsform wird die Kommunikation, also insbesondere das Senden und/oder das Empfangen von Daten, über ein Kommunikationsnetzwerk durchgeführt.

Nach einer Ausführungsform umfasst das Kommunikationsnetzwerk ein WLAN-Netzwerk und/oder ein Mobilfunknetzwerk.

In einer Ausführungsform wird respektive ist eine Kommunikation über das Kommunikationsnetzwerk verschlüsselt.

Nach einer Ausführungsform ist vorgesehen, dass eine Fahrzeuggeschwindigkeit des Fahrzeugs derart angepasst wird, dass das Fahrzeug noch solange in Funkreichweite der ersten Basisstation bleibt, bis die Daten vollständig an das Fahrzeug gesendet wurden.

Dadurch wird insbesondere der technische Vorteil bewirkt, dass effizient sichergestellt werden kann, dass das Fahrzeug noch in Funkreichweite der ersten Basisstation bleibt, bis die Daten vollständig an das Fahrzeug gesendet wurden, die vom Fahrzeug für seine Fahrt zur zweiten Basisstation, genauer zum Erreichen der Funkreichweite der zweiten Basisstation, benötigt werden. Das Anpassen der Fahrzeuggeschwindigkeit ist hierbei eine besonders einfache Maßnahme, die einfach durchzuführen ist.

Das Anpassen der Fahrzeuggeschwindigkeit des Fahrzeugs umfasst insbesondere, dass Fernsteuerungsdaten an das Fahrzeug gesendet werden, basierend auf welchen das Fahrzeug ferngesteuert geführt wird, sodass basierend auf diesen Fernsteuerungsdaten die Fahrzeuggeschwindigkeit angepasst wird. Insbesondere umfasst das Anpassen der Fahrzeuggeschwindigkeit, dass eine Sollfahrzeuggeschwindigkeit an das Fahrzeug gesendet wird, sodass das Fahrzeug insbesondere autonom seine momentane Fahrzeuggeschwindigkeit auf die Sollfahrzeuggeschwindigkeit regelt.

Das Anpassen der Fahrzeuggeschwindigkeit umfasst insbesondere, dass die Fahrzeuggeschwindigkeit reduziert wird. Die Fahrzeuggeschwindigkeit bezeichnet insbesondere die momentane Fahrzeuggeschwindigkeit. Das Fahrzeug wird also insbesondere langsamer fahren entsprechend der Anpassung als vor der Anpassung.

Nach einer Ausführungsform ist vorgesehen, dass ansprechend auf einen Empfang einer Nachricht des Fahrzeugs, wie hoch die vom Fahrzeug bereits empfange Datenmenge ist, geschätzt wird, welche Zeit zum vollständigen Senden der Daten von der ersten Basisstation an das Fahrzeug benötigt wird, so dass basierend auf der geschätzten Zeit, die Fahrzeuggeschwindigkeit angepasst wird.

Dadurch wird insbesondere der technische Vorteil bewirkt, dass effizient abgeschätzt werden kann, wie viel Zeit noch benötigt wird, damit sämtliche Daten, die das Fahrzeug für seine Fahrt zum Erreichen der Funkreichweite der zweiten Basisstation benötigt, an das Fahrzeug übertragen werden. Entsprechend kann dann effizient die Fahrzeuggeschwindigkeit angepasst werden. Denn aufgrund der Nachricht des Fahrzeugs ist bekannt, wie viel Daten das Fahrzeug bereits empfangen hat. Dadurch ist also eine verbesserte Abschätzung der vorgenannten Zeit ermöglicht.

In einer anderen Ausführungsform ist vorgesehen, dass das Schätzen basierend auf einer Sendeleistung der ersten Basisstation, die basierend auf einer digitalen Sendeleistungskarte ermittelt wird, die angibt, wie hoch eine jeweilige Sendeleistung der Basisstationen ist, und/oder basierend auf einer momentanen Datenübertragungsrate zwischen der ersten Basisstation und der zweiten Basisstation durchgeführt wird.

Dadurch wird insbesondere der technische Vorteil bewirkt, dass eine effiziente Anpassung der Fahrzeuggeschwindigkeit ermöglicht ist, insofern eine genaue Schätzung der vorstehend genannten Zeit ermöglicht ist. Denn wenn eine momentane Datenübertragungsrate bekannt ist, so kann in der Regel ziemlich genau abgeschätzt werden, wie viel Zeit noch benötigt wird, um die restlichen Daten zu übertragen, insbesondere kann basierend auf der Sendeleistungskarte, also basierend auf der Sendeleistung der ersten Basisstation, die noch benötigte Zeit ermittelt werden. Denn in der Regel ist es so, dass je höher eine Sendeleistung ist, desto schneller können Daten übertragen werden.

Gemäß Ansprüche 1 und 7 ist vorgesehen, dass das Ermitteln der Mindestdatenmenge basierend auf einer jeweiligen Sendeleistung der ersten und der zweiten Basisstation durchgeführt wird, wobei die jeweiligen Sendeleistungen basierend auf einer digitalen Sendeleistungskarte ermittelt werden, die angibt, wie hoch eine jeweilige Sendeleistung der Basisstationen ist.

Dadurch wird insbesondere der technische Vorteil bewirkt, dass die zu ermittelnde Mindestdatenmenge effizient ermittelt werden kann. Denn da bekannt ist, wie hoch die Sendeleistung der zweiten Basisstation ist, kann effizient abgeschätzt werden, wann das Fahrzeug in Funkreichweite der zweiten Basisstation kommt. Da auch bekannt ist, wie hoch die Sendeleistung der ersten Basisstation ist, kann effizient abgeschätzt werden, wie lange sich das Fahrzeug innerhalb der Funkreichweite der ersten Basisstation aufhalten wird und/oder, an welchem Ort auf dem Parkplatz es die Funkreichweite der ersten Basisstation verlassen wird. Somit kann also besonders gut abgeschätzt werden, wie viele Daten dem Fahrzeug mindestens zur Verfügung gestellt werden müssen, damit es die Funkreichweite der zweiten Basisstation noch erreichen kann.

Nach einer Ausführungsform ist vorgesehen, dass ansprechend auf einen Empfang einer vom Fahrzeug gemessenen Empfangsleistung und/oder einer vom Fahrzeug gemessenen Datenübertragungsrate eine digitale Sendeleistungskarte aktualisiert wird, die angibt, wie hoch eine jeweilige Sendeleistung der Basisstationen ist.

Dadurch wird insbesondere der technische Vorteil bewirkt, dass stets aktualisierte Sendeleistungen für einzelne Basisstationen der digitalen Sendeleistungskarte zur Verfügung stehen. Somit kann insbesondere verhindert werden, dass das Ermitteln der Mindestdatenmenge basierend auf veralteten und gegebenenfalls nicht mehr gültigen Werten von Sendeleistungen durchgeführt wird. Somit kann also ein genaues Ermitteln der Mindestdatenmenge sichergestellt werden.

Nach einer Ausführungsform ist eine digitale Sendeleistungskarte vorgesehen, die angibt, wie hoch eine jeweilige Sendeleistung der Basisstationen ist.

Nach einer Ausführungsform ist vorgesehen, dass die vorstehend genannten Schritte a) und b) iterativ für weitere Basisstationen durchgeführt werden, so dass das Fahrzeug eine Funkreichweite einer Basisstation verlassen und in Funkreichweite einer weiteren Basisstation basierend auf denjenigen Daten fahren kann, die die eine Basisstation an das Fahrzeug gesendet hat, bis das Fahrzeug eine Zielposition auf dem Parkplatz erreicht hat.

Das heißt also insbesondere, dass die vor- und nachstehend genannten Schritte im Zusammenhang mit der ersten und der zweiten Basisstation auch für weitere Basisstationen fortgeführt werden können. Das heißt also, dass das Fahrzeug beispielsweise nach der zweiten Basisstation zu einer dritten und von dort zu einer vierten und gegebenenfalls zu einer fünften und gegebenenfalls zu einer sechsten und so weiter fahren kann. Dies analog zu einer Fahrt von der ersten zur zweiten Basisstation. Das heißt also insbesondere, dass das Fahrzeug, wenn es sich in Funkreichweite der zweiten Basisstation befindet, eine Mindestmenge an Daten empfängt, die das Fahrzeug benötigt, um die Funkreichweite der zweiten Basisstation zu verlassen und in Funkreichweite der dritten Basisstation zu gelangen. Insbesondere ist dann vorgesehen, dass, wenn sich das Fahrzeug innerhalb der Funkreichweite der dritten Basisstation befindet, dem Fahrzeug eine Mindestdatenmenge an Daten zur Verfügung gestellt wird, die das Fahrzeug benötigt, um in Funkreichweite einer vierten Basisstation zu gelangen. Dies kann solange beliebig fortgesetzt werden, bis das Fahrzeug seine Zielposition auf dem Parkplatz erreicht hat.

Das heißt also insbesondere, dass hier ein erfindungsgemäßer Gedanke darin zu sehen ist, dass dem Fahrzeug für seine Fahrt auf dem Parkplatz zu einer Zielposition nicht bereits am Anfang der Fahrt sämtliche hierfür notwendige Daten zur Verfügung gestellt werden. Vielmehr ist erfindungsgemäß vorgesehen, dass die für die Fahrt auf dem Parkplatz zur Zielposition benötigten Daten dem Fahrzeug abschnittsweise zur Verfügung gestellt werden. Abschnittsweise heißt hier insbesondere, dass dem Fahrzeug insbesondere nur Daten für einen unmittelbar vorausliegenden Abschnitt, also zum Beispiel von einer ersten zur zweiten Basisstation oder von einer zweiten zur dritten Basisstation, zur Verfügung gestellt werden.

Eine Zielposition auf dem Parkplatz bezeichnet insbesondere eine Position, zu welcher das Fahrzeug hinfahren soll. Eine Zielposition ist zum Beispiel eine Parkposition auf dem Parkplatz, an welcher das Fahrzeug parken soll.

Eine Fahrt des Fahrzeugs zur Zielposition beginnt insbesondere von einer Startposition aus. Eine Startposition ist zum Beispiel eine Abstellposition des Parkplatzes, an welcher ein Fahrer sein Fahrzeug abstellen kann.

Eine Startposition ist zum Beispiel eine Parkposition, an welcher ein Fahrzeug geparkt ist. In diesem Fall ist dann insbesondere die Zielposition eine Abholposition, an welcher ein Fahrer des Fahrzeugs sein Fahrzeug abholen kann.

Nach einer Ausführungsform sind die Abholposition und die Abstellposition identisch.

In einer anderen Ausführungsform sind die Abholposition und die Abstellposition verschieden.

Die Abholposition ist insbesondere in einem Ausgangsbereich des Parkplatzes angeordnet. Die Abstellposition ist insbesondere in einem Eingangsbereich des Parkplatzes angeordnet. Eingangsbereich und Ausgangsbereich des Parkplatzes können sich insbesondere überschneiden.

Nach einer Ausführungsform ist vorgesehen, dass es sich bei der Fahrt des Fahrzeugs auf dem Parkplatz um eine autonome Fahrt des Fahrzeugs handelt. Das heißt also, dass das Fahrzeug basierend auf den Daten autonom auf dem Parkplatz fährt, also insbesondere autonom von der ersten Basisstation in Funkreichweite der zweiten Basisstation fährt.

Nach einer Ausführungsform ist vorgesehen, dass die Fahrt des Fahrzeugs auf dem Parkplatz eine ferngesteuerte Fahrt ist. Das heißt also insbesondere, dass das Fahrzeug ferngesteuert geführt wird. Das heißt also, dass das Fahrzeug ferngesteuert von der ersten Basisstation in Funkreichweite der zweiten Basisstation geführt wird.

Nach einer Ausführungsform ist vorgesehen, dass die Fahrt des Fahrzeugs auf dem Parkplatz sowohl eine ferngesteuerte als auch eine autonome Fahrt umfasst. Das heißt also, dass das Fahrzeug zum Beispiel einen Abschnitt autonom fährt und einen weiteren Abschnitt ferngesteuert geführt wird. Hier sind insbesondere beliebige Kombinationen möglich.

Nach einer Ausführungsform ist vorgesehen, dass das Fahrzeug autonom oder ferngesteuert in die oder an die Parkposition einparkt.

Nach einer Ausführungsform ist vorgesehen, dass das Fahrzeug autonom oder ferngesteuert aus der Parkposition ausparkt.

Nach einer Ausführungsform ist vorgesehen, dass das Fahrzeug autonom und/oder ferngesteuert von einer Startposition zu einer Zielposition auf dem Parkplatz geführt wird. Insbesondere ist nach einer Ausführungsform vorgesehen, dass das Fahrzeug von der Zielposition zurück zur Startposition autonom fährt und/oder ferngesteuert geführt wird.

Autonom im Sinne der vorliegenden Erfindung bedeutet insbesondere, dass das Fahrzeug selbstständig, also ohne einen Eingriff eines Fahrers, auf dem Parkplatz navigiert oder fährt. Das Fahrzeug fährt also selbstständig auf dem Parkplatz, ohne dass ein Fahrer hierfür das Fahrzeug steuern müsste. Ein solches Fahren umfasst insbesondere ein Steuern oder Regeln einer Querund/oder einer Längsführung des Fahrzeugs. Ein solch autonom fahrendes Fahrzeug, das automatisch ein- und ausparken kann, wird beispielsweise als ein AVP-Fahrzeug bezeichnet. AVP steht für "Automatic Valet Parking" und kann mit "automatischer Parkvorgang" übersetzt werden. Fahrzeuge, die diese AVP-Funktionalität nicht aufweisen, werden beispielsweise als normale Fahrzeuge bezeichnet.

Nach einer Ausführungsform ist vorgesehen, dass Daten ermittelt werden, die das Fahrzeug für seine Fahrt auf dem Parkplatz von einer Startposition zu einer Zielposition benötigt, wobei die Daten der Mindestdatenmenge basierend auf den ermittelten Daten ermittelt werden.

Das heißt also insbesondere, dass zwar bereits zu Beginn der Fahrt des Fahrzeugs auf dem Parkplatz sämtliche notwendige Daten ermittelt werden. Es werden aber von diesen Daten nur diejenigen Daten an das Fahrzeug gesendet, die das Fahrzeug für seine Fahrt von der ersten zur zweiten Basisstation benötigt. Dadurch kann insbesondere eine Verweildauer des Fahrzeugs innerhalb der Funkreichweite der ersten Basisstation verkürzt werden.

Nach einer weiteren Ausführungsform ist vorgesehen, dass von diesen bereits im Vorfeld ermittelten Daten diejenigen Daten dem Fahrzeug zur Verfügung gestellt werden, die es dann für seine Fahrt von der zweiten zur dritten Basisstation respektive von der dritten zur vierten und so weiter benötigt.

Gemäß Ansprüche 1 und 7 ist vorgesehen, dass die Daten ein oder mehrere Elemente der folgenden Gruppe von Daten umfassen: Trajektoriendaten, Kartendaten einer digitalen Karte des Parkplatzes, Fernsteuerungsdaten, Objektdaten von sich auf dem Parkplatz befindenden mobilen und/oder stationären Objekten, Landmarkendaten, Verkehrsdaten und Gefährdungsdaten.

Das heißt also insbesondere, dass die Trajektoriendaten dem Fahrzeug eine Solltrajektorie vorgeben, die es entlang seiner Fahrt abfahren soll. Basierend auf den Kartendaten der digitalen Karte des Parkplatzes kann sich beispielsweise das Fahrzeug in vorteilhafter Weise innerhalb des Parkplatzes orientieren und/oder basierend auf diesen Kartendaten auf dem Parkplatz navigieren. Basierend auf den Fernsteuerungsdaten ist insbesondere eine Fernsteuerung des Fahrzeugs ermöglicht. Somit umfassen beispielsweise Fernsteuerungsdaten Fernsteuerungsbefehle. Objektdaten von sich auf dem Parkplatz befindenden mobilen und/oder stationären Objekten umfassen insbesondere Positionsdaten dieser Objekte. Das heißt also, dass die Objektdaten vorgeben, wo sich welche Objekte auf dem Parkplatz befinden. Insbesondere ist vorgesehen, dass Objektdaten bei mobilen Objekten noch Geschwindigkeitsdaten umfassen, sodass eine momentane Geschwindigkeit dieser Objekte bekannt ist.

Ein stationäres Objekt bezeichnet insbesondere ein Objekt, welches sich nicht bewegen kann. Beispielsweise ist ein stationäres Objekt eine feststehende Infrastruktur wie zum Beispiel eine Säule im Parkhaus. Ein mobiles Objekt bezeichnet insbesondere ein Objekt, welches sich bewegen kann, auch wenn es sich gerade nicht bewegt. So ist beispielsweise ein geparktes oder abgestelltes Fahrzeug ein mobiles Objekt. Denn es kann sich ja bewegen. Ein mobiles Objekt bezeichnet also insbesondere weitere Fahrzeuge und/oder Personen und/oder Tiere auf dem Parkplatz.

Landmarkendaten umfassen insbesondere eine Position der Landmarke oder mehrerer Landmarken und/oder einen Landmarkentyp der Landmarke(n) und/oder insbesondere den Inhalt der Landmarke(n). Landmarkendaten werden insbesondere von Fahrzeugen verwendet und können beispielsweise benötigt werden, um autonom auf dem Parkplatz zu fahren. Der Inhalt einer Landmarke umfasst zum Beispiel eine oder mehrere Formen, die mittels einer Umfeldsensorik, insbesondere mittels visueller Senoren, wiedergefunden werden können, zum Beispiel mittels des Fahrzeugs. Ein Inhalt umfasst zum Beispiel: einen Barcode und/oder eine bestimmte Form eine Infrastruktur (zum Beispiel eine Anordnung von Säulen mit bestimmten Abmassen und Abständen) und/oder eine bestimmte Form (zum Beispiel eine Statue). Ein Inhalt einer Landmarke ist also insbesondere etwas, das inklusive deren Position bekannt ist (zum Beispiel in einer digitalen Karte hinterlegt) und sich in der realen Welt wiederfindet. Eine Landmarke wird also zum Beispiel verwendet, um zu erkennen und/oder zu analysieren, wo sich das Fahrzeug befindet. Eine Landmarke ist also zum Beispiel ein Wiedererkennungspunkt.

Verkehrdaten umfassen zum Beispiel eine Position eines Verkehrszeichens oder mehrerer Verkehrszeichen und einen Verkehrstyp des oder der Verkehrszeichen. Verkehrsdaten sind insbesondere von Kartendaten einer digitalen Karte umfasst, müssen es aber nicht sein.

Gefährdungsdaten umfassen eine Position eines gefährlichen Bereichs oder mehrerer gefährlicher Bereiche auf dem Parkplatz und eine Art oder ein Typ der Gefährdung des oder der gefährlichen Bereiche. Ein gefährlicher Bereich ist zum Beispiel ein Bereich auf dem Parkplatz, innerhalb dessen ein Fahrzeug, insbesondere ein AVP-Fahrzeug, Probleme hat. Dies zum Beispiel deshalb, weil in diesem Bereich eine sensorische Umfelderfassung schwierig ist.

Nach einer Ausführungsform ist vorgesehen, dass die Vorrichtung zum Betreiben eines Parkplatzes eingerichtet oder ausgebildet ist, das Verfahren zum Betreiben eines Parkplatzes aus- oder durchzuführen.

Die im Zusammenhang mit dem Verfahren gemachten Ausführungen gelten analog für die Vorrichtung und für das Parksystem und umgekehrt. Das heißt also insbesondere, dass sich die technischen Merkmale und technischen Funktionalitäten, wie sie sich im Rahmen der Vorrichtung ergeben, auch für das Verfahren und umgekehrt gelten. Das heißt also beispielsweise, dass der Prozessor ausgebildet ist, die Mindestdatenmenge gemäß den vorstehend gemachten Ausführungen und/oder gemäß den nachstehend gemachten Ausführungen zu ermitteln.

Nach einer Ausführungsform ist die Steuerungseinrichtung eingerichtet, die zweite Basisstation und/oder weitere Basisstationen zu steuern. Das heißt also, dass die Steuerungseinrichtung die zweite Basisstation derart steuern kann, dass die zweite Basisstation eine ermittelte Mindestdatenmenge von Daten, die das Fahrzeug für seine Fahrt zu einer dritten Basisstation benötigt, an das sich in Funkreichweite der zweiten Basisstation befindende Fahrzeug sendet. Diese Mindestdatenmenge wurde zuvor vom Prozessor gemäß den vor- und nachstehend gemachten Ausführungen ermittelt. Dies gilt auch für weitere Basisstationen. Das heißt also, dass mittels der Vorrichtung das Fahrzeug zu einer Zielposition geführt werden kann, wobei die hierfür benötigten Daten abschnittsweise dem Fahrzeug zur Verfügung gestellt werden. Die Steuerungseinrichtung ist insbesondere eingerichtet, die Basisstationen zu steuern.

Die Erfindung wird im Folgenden anhand von bevorzugten Ausführungsbeispielen näher erläutert. Hierbei zeigen
- Fig. 1: ein Ablaufdiagramm eines Verfahrens zum Betreiben eines Parkplatzes,
- Fig. 2: eine Vorrichtung zum Betreiben eines Parkplatzes,
- Fig. 3: ein Parksystem für Fahrzeuge und
- Fig. 4: ein weiteres Parksystem für Fahrzeuge.

Im Folgenden können für gleiche Merkmale gleiche Bezugszeichen verwendet werden.

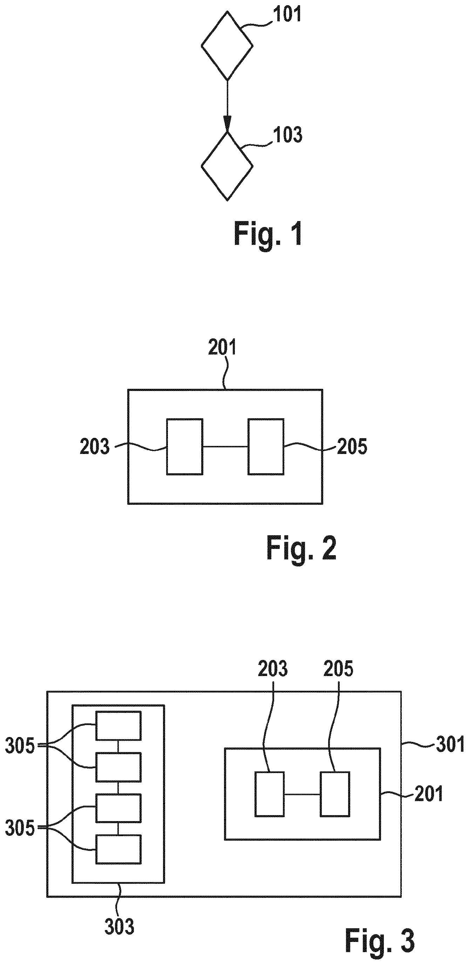

Fig. 1 zeigt ein Ablaufdiagramm eines Verfahrens zum Betreiben eines Parkplatzes, innerhalb welchem mehrere Basisstationen angeordnet sind.

Gemäß einem Schritt 101 wird eine Mindestdatenmenge von von einem Fahrzeug für seine Fahrt auf dem Parkplatz benötigte Daten derart ermittelt, dass das Fahrzeug basierend auf den der Mindestdatenmenge entsprechenden Daten eine Funkreichweite einer ersten Basisstation verlassen und in Funkreichweite einer zweiten Basisstation fahren kann. In einem Schritt 103 ist vorgesehen, dass die erste Basisstation die ermittelte Mindestdatenmenge von Daten an das sich in Funkreichweite der ersten Basisstation befindende Fahrzeug sendet, sodass das Fahrzeug basierend auf den Daten die Funkreichweite der ersten Basisstation verlassen und in Funkreichweite der zweiten Basisstation fahren kann.

Fig. 2 zeigt eine Vorrichtung 201 zum Betreiben eines Parkplatzes, innerhalb welchem mehrere Basisstationen angeordnet sind.

Die Vorrichtung 201 umfasst einen Prozessor 203, der ausgebildet ist, eine Mindestdatenmenge von von einem Fahrzeug für seine Fahrt auf dem Parkplatz benötigte Daten derart zu ermitteln, dass das Fahrzeug basierend auf dem der Mindestdatenmenge entsprechenden Daten eine Funkreichweite einer ersten Basisstation verlassen und in Funkreichweite einer zweiten Basisstation fahren kann.

Die Vorrichtung 201 umfasst ferner eine Steuerungseinrichtung 205 zum Steuern der ersten Basisstation derart, dass die erste Basisstation die ermittelte Mindestdatenmenge von Daten an das sich in Funkreichweite der ersten Basisstation befindende Fahrzeug sendet, sodass das Fahrzeug basierend auf den Daten die Funkreichweite der ersten Basisstation verlassen und in Funkreichweite der zweiten Basisstation fahren kann.

Die Steuerungseinrichtung ist insbesondere ausgebildet, die mehreren Basisstationen entsprechend den vorstehend und/oder nachstehend gemachten Ausführungen zu steuern, sodass diese entsprechende Mindestdatenmengen an das Fahrzeug senden, wenn sich dieses in ihrer Funkreichweite befindet.

Fig. 3 zeigt ein Parksystem 301 für Fahrzeuge.

Das Parksystem 301 umfasst die Vorrichtung 201 der Fig. 2. Das Parksystem 301 umfasst ferner einen Parkplatz 303, innerhalb welchem mehrere Basisstationen 305 angeordnet sind.

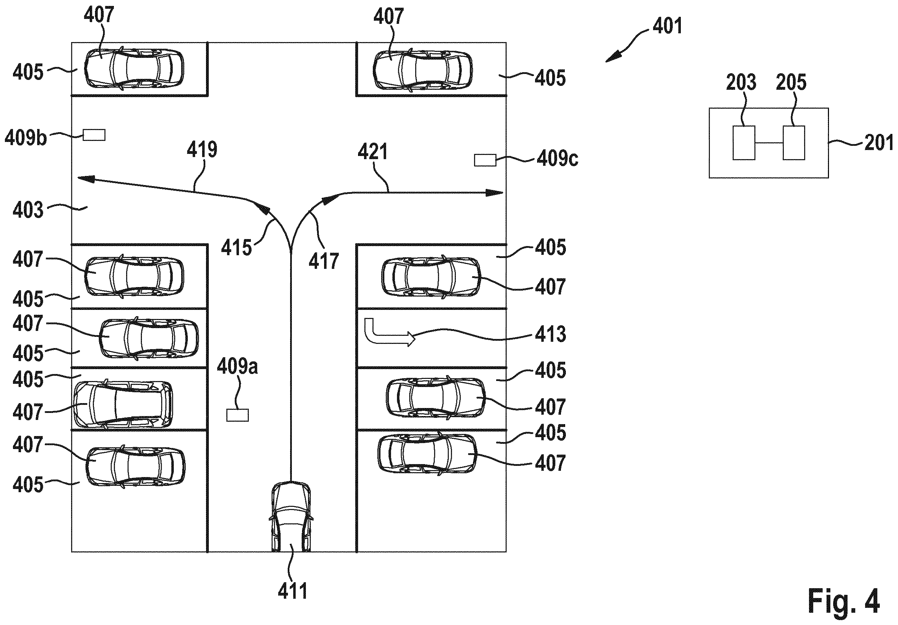

Fig. 4 zeigt ein weiteres Parksystem 401 für Fahrzeuge.

Das Parksystem 401 umfasst die Vorrichtung 201 der Fig. 2. Ferner umfasst das Parksystem 401 einen Parkplatz 403, wobei die Fig. 4 beispielhaft einen Ausschnitt des Parkplatzes 403 zeigt. Der Parkplatz 403 umfasst mehrere Parkpositionen 405. Beispielhaft eingezeichnet sind Fahrzeuge 407, die auf den Parkpositionen 405 parken.

Der Parkplatz 403 umfasst beispielhaft drei Basisstationen 409a, 409b und 409c. Es wird angemerkt, dass die hier gezeigte Anzahl an Basisstationen lediglich beispielhaft ist. In weiteren Ausführungsformen sind mehr oder weniger als drei Basisstationen vorgesehen.

Das Bezugszeichen 411 zeigt auf ein Fahrzeug, welches innerhalb des Parkplatzes oder auf dem Parkplatz 403 fährt. Das Fahrzeug 411 befindet sich in Funkreichweite der Basisstation 409a, die im Folgenden als erste Basisstation bezeichnet wird.

Das Bezugszeichen 413 zeigt auf einen Richtungspfeil, der auf der Fahrbahn aufgezeichnet ist, wobei dieser Richtungspfeil 413 eine Fahrtrichtung auf dem Parkplatz 403 vorgibt.

Solange sich das Fahrzeug 411 in Funkreichweite der Basisstation 409a befindet, werden Daten, die das Fahrzeug für seine Fahrt auf dem Parkplatz 403 benötigt, an das Fahrzeug 411 übertragen. Dies dadurch, indem die Basisstation 409a diese Daten an das Fahrzeug 411 sendet. Hierbei sendet die Basisstation 409a aber nur so viele Daten an das Fahrzeug 411, wie das Fahrzeug 411 für eine Fahrt bis in Funkreichweite der Basisstation 409b oder der Basisstation 409c benötigt abhängig von einer Zielposition des Fahrzeugs 411 auf dem Parkplatz 403.

Diese Daten umfassen beispielsweise Trajektoriendaten einer Trajektorie 415, wenn das Fahrzeug in Funkreichweite der Basisstation 409b fahren soll. Beispielsweise umfassen diese Daten Trajektoriendaten einer Trajektorie 417, wenn das Fahrzeug in Funkreichweite der Basisstation 409c fahren soll. Diese Daten umfassen zum Beispiel Landmarkendaten und/oder Verkehrsdaten und/oder Gefährdungsdaten.

Sobald das Fahrzeug dann in Funkreichweite der Basisstation 409b respektive der Basisstation 409c gelangt, kann dann die entsprechende Basisstation weitere Daten an das Fahrzeug 411 senden. Die beiden Basisstationen 409b, 409c können somit als zweite Basisstation bezeichnet werden.

Die Daten, die dann von der Basisstation 409b respektive 409c an das Fahrzeug 411 gesendet werden, umfassen beispielsweise Trajektoriendaten einer Trajektorie 419 respektive 421, die das Fahrzeug bei seiner Fahrt zur Zielposition auf dem Parkplatz 403 abfahren soll.

Hierbei sendet dann die entsprechende Basisstation 409b respektive 409c nur so viele Daten an das Fahrzeug 411, wie das Fahrzeug 411 für eine Fahrt von der entsprechenden Basisstation 409b respektive 409c zu einer dritten Basisstation benötigt, also bis das Fahrzeug in Funkreichweite der dritten Basisstation gelangt. Dies kann insbesondere iterativ so fortgesetzt werden, bis das Fahrzeug dann letztlich seine Zielposition erreicht hat.

Das heißt also insbesondere, dass nach Festlegung einer Zielposition auf dem Parkplatz für das Fahrzeug 411 erst ein erster Teil (Trajektorie 415 respektive Trajektorie 417) einer Gesamttrajektorie (von einer Startposition zu der Zielposition) an das Fahrzeug von der ersten Sendestation 409a übermittelt wird, die das Fahrzeug 411 gerade noch in den Bereich ausreichend hoher Sendestärke (also innerhalb der Funkreichweite) der entsprechenden Basisstation 409b respektive 409c erreicht. Hat dann das Fahrzeug 411 den Sendebereich, also die Funkreichweite, der entsprechenden Basisstation 409b, 409c erreicht, wird im gleichen Sinne iterativ weiter verfahren. Das heißt, dass die entsprechende Baisstation 409b,c einen zweiten Teil (Trajektorie 419 oder 421) der Gesamttrajektorie an das Fahrzeug 411 sendet.

Das Fahrzeug 411 ist zum Beispiel ein AVP-Fahrzeug.

Die Erfindung umfasst also insbesondere und unter anderem den Gedanken, ein automatisiertes Valet Parking-System zu betreiben unter Steigerung einer Durchflussrate durch ein abschnittsweises Versenden von Trajektorien und/oder weiteren Parkplatz- (beispielsweise Parkhaus-)Daten von der Vorrichtung, die beispielsweise von einem Parkplatz-, insbesondere einem Parkhausserver, umfasst sein kann, an das Fahrzeug, welches beispielsweise ein AVP-Fahrzeug ist. Dies führt in vorteilhafter Weise insbesondere in einem Einfahrtbereich zu einer Verkürzung einer initialen Übertragungsphase und damit zu einer Reduktion der Wartezeiten und einer damit verbundenen Reduktion der Gefahr eines längeren Rückstaus im Fall einer hohen Anfahrtrate von Fahrzeugen, insbesondere von AVP-Fahrzeugen.

Ein erfindungsgemäßer Kerngedanke ist insbesondere ein abschnittsweises Versenden der benötigten Informationen. Ein wichtiger Faktor hierfür ist insbesondere eine zum aktuellen Zeitpunkt vorhandene Bandbreite zur Übertragung von Informationen (Datenübertragungsrate) von der Basisstation zum Fahrzeug und unter Berücksichtigung weiterer Basisstationen auf dem Parkplatz, der beispielsweise als eine Parkieranlage bezeichnet werden kann, respektive unter Berücksichtigung der mittels des Fahrzeugs abzufahrenden Trajektorie.

Insbesondere ist nach einer Ausführungsform vorgesehen, in Abhängigkeit der zu erwartenden Bandbreite und der noch zu übertragenden Informationen eine Anpassung der Fahrzeuggeschwindigkeit vorzunehmen, sodass im Bereich ausreichender Sendestärke einer Basisstation die für das Fahrzeug relevanten Informationen übertragen werden können.

Das heißt also insbesondere, dass die vom Fahrzeug für seine Fahrt auf dem Parkplatz benötigten Informationen derart abschnittsweise an das Fahrzeug übertragen werden, dass das Fahrzeug ausreichende Informationen (wie zum Beispiel eine Trajektorie und/oder eine digitale Karte mit zum Beispiel Landmarken und einer Zielposition) erhält, um in einen Bereich höherer Übertragungsrate eines nachfolgenden Access Points zu gelangen, wodurch die Verweilzeiten in einem Einfahrtbereich des Parkplatzes reduziert und damit eine Durchflussrate erhöht werden können.

So ist also nach einer Ausführungsform vorgesehen, dass beispielsweise von einem Parkhausmanagementsystem, das beispielsweise die Vorrichtung umfassen kann, eine Zielposition, zum Beispiel eine Parkposition, ausgewählt wird. Insbesondere wird nach einer Ausführungsform eine Trajektorie zu dessen Erreichung geplant. Die Trajektorie wird zum Beispiel nach einer Ausführungsform mittels einer vorhandenen digitalen Karte des Parkplatzes, die Auskunft darüber gibt, wie sich die Sendeleistung eines jeden Access Points auf der Parkieranlage verhält, dahingehend partitioniert, dass vom aktuellen Access Point gerade noch diejenige Trajektorie übertragen wird, die das Fahrzeug in den Empfangs- und Sendebereich des folgenden Access Points auf der zu fahrenden Trajektorie führt. Dieser Vorgang wird insbesondere bis zur Erreichung der Zielposition iterativ durchgeführt.

Insbesondere ist nach einer Ausführungsform vorgesehen, dass das Fahrzeug eine aktuell vorhandene Empfangsleistung und Datenrate misst und diese an die Vorrichtung überträgt, die dann insbesondere basierend darauf die Sendeleistungskarte optimieren, also aktualisieren kann.

Nach einer Ausführungsform ist vorgesehen, eine Geschwindigkeit des Fahrzeugs über die noch innerhalb eines Empfangsbereichs eines Access Points noch zu übertragenden Informationen zu regulieren oder anzupassen. Hierbei ist insbesondere vorgesehen, dass dem Fahrzeug beispielsweise mitgeteilt wird, welcher Datenumfang (Mindestdatenmenge) innerhalb des aktuellen Access Points somit zu übertragen ist. Das Fahrzeug kann dann insbesondere in vorteilhafter Weise ermitteln, welche Datenmenge bereits empfangen wurde. Über die Sendeleistungskarte und/oder die aktuelle Datenrate wird dann insbesondere abgeschätzt, welche Zeit zur vollständigen Übertragung der Daten noch benötigt wird. Sollte die aktuelle Geschwindigkeit dazu führen, dass bei der so erfassten Datenrate nicht die vollständige Information übertragen werden kann, bis das Fahrzeug die Funkreichweite der Basisstation verlassen hat, wird die Geschwindigkeit des Fahrzeugs auf den Wert reduziert, damit das Fahrzeug noch innerhalb der Funkreichweite der ersten Basisstation bleibt, bis die Daten vollständig übertragen wurden.

Erfindungsgemäße Vorteile liegen insbesondere in einer Reduktion der Wartezeiten in einem Einfahrtbereich des Parkplatzes sowie in einer Erhöhung von Durchflussraten von Fahrzeugen.

Ferner kann eine Anzahl an Access Points reduziert werden, indem eine Geschwindigkeit eines Fahrzeugs an die noch zu übertragenden Informationen und eine aktuelle zur Verfügung stehende Datenrate angepasst wird, sodass die innerhalb eines Access Points zu übertragenden Informationen vollständig das AVP-Fahrzeug erreicht. Das heißt insbesondere, dass das Fahrzeug während der Fahrt die Informationen vorausschauend vom Server, also zum Beispiel von der Vorrichtung, erhält und bei größerer Entfernung vom Access Point (und damit geringerer Datenrate) langsamer fährt.

## Patentansprüche

1. Verfahren zum Betreiben eines Parkplatzes (303, 403), innerhalb welchem mehrere Basisstationen (305, 409a, 409b, 409c) angeordnet sind, **dadurch gekennzeichnet, dass**
a) eine Mindestdatenmenge von von einem Fahrzeug (411) für seine Fahrt auf dem Parkplatz (303, 403) benötigte Daten derart ermittelt (101) wird, dass das Fahrzeug (411) basierend auf den der Mindestdatenmenge entsprechenden Daten eine Funkreichweite einer ersten Basisstation (409a) verlassen und in Funkreichweite einer zweiten Basisstation (409b, 409c) fahren kann,
b) wobei die erste Basisstation (409a) die ermittelte Mindestdatenmenge von Daten an das sich in Funkreichweite der ersten Basisstation (409a) befindende Fahrzeug (411) sendet (103), so dass das Fahrzeug (411) basierend auf den Daten die Funkreichweite der ersten Basisstation (409a) verlassen und in Funkreichweite der zweiten Basisstation (409b, 409c) fahren kann,
c) wobei das Ermitteln der Mindestdatenmenge basierend auf einer jeweiligen Sendeleistung der ersten (409a) und der zweiten Basisstation (409b, 409c) durchgeführt wird, wobei die jeweiligen Sendeleistungen basierend auf einer digitalen Sendeleistungskarte ermittelt werden, die angibt, wie hoch eine jeweilige Sendeleistung der Basisstationen (305, 409a, 409b, 409c) ist,
d) wobei Daten ermittelt werden, die das Fahrzeug (411) für seine Fahrt auf dem Parkplatz von einer Startposition zu einer Zielposition benötigt, wobei die Daten der Mindestdatenmenge basierend auf den ermittelten Daten ermittelt werden, das heißt, dass von diesen Daten nur diejenigen Daten an das Fahrzeug (411) gesendet werden, die das Fahrzeug (411) für seine Fahrt von der ersten (409a) zur zweiten Basisstation (409b, 409c) benötigt,
e) wobei die Daten ein oder mehrere Elemente der folgenden Gruppe von Daten umfassen: Trajektoriendaten, Kartendaten einer digitalen Karte des Parkplatzes (303, 403), Fernsteuerungsdaten, Objektdaten von sich auf dem Parkplatz (303, 403) befindenden mobilen und/oder stationären Objekten, Landmarkendaten, Verkehrsdaten und Gefährdungsdaten.

2. Verfahren nach Anspruch 1, wobei eine Fahrzeuggeschwindigkeit des Fahrzeugs (411) derart angepasst wird, dass das Fahrzeug (411) noch solange in Funkreichweite der ersten Basisstation (409a) bleibt, bis die Daten vollständig an das Fahrzeug (411) gesendet wurden.

3. Verfahren nach Anspruch 2, wobei ansprechend auf einen Empfang einer Nachricht des Fahrzeugs (411), wie hoch die vom Fahrzeug (411) bereits empfange Datenmenge ist, geschätzt wird, welche Zeit zum vollständigen Senden der Daten von der ersten Basisstation (409a) an das Fahrzeug (411) benötigt wird, so dass basierend auf der geschätzten Zeit, die Fahrzeuggeschwindigkeit angepasst wird.

4. Verfahren nach Anspruch 3, wobei das Schätzen basierend auf einer Sendeleistung der ersten Basisstation (409a), die basierend auf einer digitalen Sendeleistungskarte ermittelt wird, die angibt, wie hoch eine jeweilige Sendeleistung der Basisstationen (305, 409a, 409b, 409c) ist, und/oder basierend auf einer momentanen Datenübertragungsrate zwischen der ersten Basisstation (409a) und der zweiten Basisstation (409b, 409c) durchgeführt wird.

5. Verfahren nach einem der vorherigen Ansprüche, wobei ansprechend auf einen Empfang einer vom Fahrzeug (411) gemessenen Empfangsleistung und/oder einer vom Fahrzeug (411) gemessenen Datenübertragungsrate eine digitale Sendeleistungskarte aktualisiert wird, die angibt, wie hoch eine jeweilige Sendeleistung der Basisstationen (305, 409a, 409b, 409c) ist.

6. Verfahren nach einem der vorherigen Ansprüche, wobei die Schritte a) und b) iterativ für weitere Basisstationen (305, 409a, 409b, 409c) durchgeführt werden, so dass das Fahrzeug (411) eine Funkreichweite einer Basisstation verlassen und in Funkreichweite einer weiteren Basisstation basierend auf denjenigen Daten fahren kann, die die eine Basisstation an das Fahrzeug (411) gesendet hat, bis das Fahrzeug (411) eine Zielposition auf dem Parkplatz erreicht hat.

7. Vorrichtung (201) zum Betreiben eines Parkplatzes (303, 403), innerhalb welchem mehrere Basisstationen (305, 409a, 409b, 409c) angeordnet sind, **gekennzeichnet durch**:
- einen Prozessor (203), der ausgebildet ist, eine Mindestdatenmenge von von einem Fahrzeug (411) für seine Fahrt auf dem Parkplatz (303, 403) benötigte Daten, derart zu ermitteln, dass das Fahrzeug (411) basierend auf den der Mindestdatenmenge entsprechenden Daten eine Funkreichweite einer ersten Basisstation (409a) verlassen und in Funkreichweite einer zweiten Basisstation (409b, 409c) fahren kann, und
- eine Steuerungseinrichtung (205) zum Steuern der ersten Basisstation (409a) derart, dass die erste Basisstation (409a) die ermittelte Mindestdatenmenge von Daten an das sich in Funkreichweite der ersten Basisstation (409a) befindende Fahrzeug (411) sendet, so dass das Fahrzeug (411) basierend auf den Daten die Funkreichweite der ersten Basisstation (409a) verlassen und in Funkreichweite der zweiten Basisstation (409b, 409c) fahren kann,
- wobei das Ermitteln der Mindestdatenmenge basierend auf einer jeweiligen Sendeleistung der ersten (409a) und der zweiten Basisstation (409b, 409c) durchgeführt wird, wobei die jeweiligen Sendeleistungen basierend auf einer digitalen Sendeleistungskarte ermittelt werden, die angibt, wie hoch eine jeweilige Sendeleistung der Basisstationen (305, 409a, 409b, 409c) ist,
- wobei Daten ermittelt werden, die das Fahrzeug (411) für seine Fahrt auf dem Parkplatz von einer Startposition zu einer Zielposition benötigt, wobei die Daten der Mindestdatenmenge basierend auf den ermittelten Daten ermittelt werden, das heißt,dass von diesen Daten nur diejenigen Daten an das Fahrzeug (411) gesendet werden, die das Fahrzeug (411) für seine Fahrt von der ersten (409a) zur zweiten Basisstation (409b, 409c) benötigt,
- wobei die Daten ein oder mehrere Elemente der folgenden Gruppe von Daten umfassen: Trajektoriendaten, Kartendaten einer digitalen Karte des Parkplatzes (303, 403), Fernsteuerungsdaten, Objektdaten von sich auf dem Parkplatz (303, 403) befindenden mobilen und/oder stationären Objekten, Landmarkendaten, Verkehrsdaten und Gefährdungsdaten.

8. Parksystem (301, 401) für Fahrzeuge (411), umfassend:
- einen Parkplatz (303, 403), innerhalb welchem mehrere Basisstationen (305, 409a, 409b, 409c) angeordnet sind, und
- die Vorrichtung (201) nach Anspruch 7.

9. Computerprogramm, umfassend Programmcode zur Durchführung des Verfahrens nach einem der Ansprüche 1 bis 6, wenn das Computerprogramm auf einem Computer ausgeführt wird.

## Claims

1. Method for operating a car park (303, 403) within which multiple base stations (305, 409a, 409b, 409c) are arranged, **characterized in that**
a) a minimum volume of data comprising data required by a vehicle (411) for its journey in the car park (303, 403) is ascertained (101) in such a way that the vehicle (411) is able to take the data corresponding to the minimum volume of data as a basis for leaving a radio range of a first base station (409a) and driving into radio range of a second base station (409b, 409c),
b) wherein the first base station (409a) transmits (103) the ascertained minimum volume of data comprising data to the vehicle (411) that is in radio range of the first base station (409a), which means that the vehicle (411) is able to take the data as a basis for leaving the radio range of the first base station (409a) and driving into radio range of the second base station (409b, 409c),
c) wherein the minimum volume of data is ascertained on the basis of a respective transmission power of the first (409a) and the second (409b, 409c) base station, the respective transmission powers being ascertained on the basis of a digital transmission power map that indicates what level a respective transmission power of the base stations (305, 409a, 409b, 409c) is at,
d) wherein data that the vehicle (411) requires for its journey in the car park from a starting position to a destination position are ascertained, the data of the minimum volume of data being ascertained on the basis of the ascertained data, that is to say that, of these data, only those data that the vehicle (411) requires for its journey from the first (409a) to the second (409b, 409c) base station are transmitted to the vehicle (411),
e) wherein the data comprise one or more elements from the following group of data: trajectory data, map data from a digital map of the car park (303, 403), remote control data, object data from mobile and/or static objects situated in the car park (303, 403), landmark data, traffic data and hazard data.

2. Method according to Claim 1, wherein a vehicle speed of the vehicle (411) is adapted in such a way that the vehicle (411) remains in radio range of the first base station (409a) until the data have been transmitted to the vehicle (411) completely.

3. Method according to Claim 2, wherein the time required for completely transmitting the data from the first base station (409a) to the vehicle (411) is estimated in response to reception of a message from the vehicle (411) regarding what level the volume of data already received by the vehicle (411) is at, which means that the estimated time is taken as a basis for adapting the vehicle speed.

4. Method according to Claim 3, wherein the estimating is carried out on the basis of a transmission power of the first base station (409a), which is ascertained on the basis of a digital transmission power map that indicates what level a respective transmission power of the base stations (305, 409a, 409b, 409c) is at, and/or on the basis of an instantaneous data transmission rate between the first base station (409a) and the second base station (409b, 409c).

5. Method according to one of the preceding claims, wherein a digital transmission power map that indicates what level a respective transmission power of the base stations (305, 409a, 409b, 409c) is at is updated in response to reception of a reception power measured by the vehicle (411) and/or a data transmission rate measured by the vehicle (411).

6. Method according to one of the preceding claims, wherein steps a) and b) are performed iteratively for further base stations (305, 409a, 409b, 409c), which means that the vehicle (411) is able to leave a radio range of one base station and to drive into radio range of a further base station on the basis of those data that the one base station has transmitted to the vehicle (411) before the vehicle (411) has reached a destination position in the car park.

7. Apparatus (201) for operating a car park (303, 403) within which multiple base stations (305, 409a, 409b, 409c) are arranged, **characterized by**:
- a processor (203) designed to ascertain a minimum volume of data comprising data required by a vehicle (411) for its journey in the car park (303, 403) in such a way that the vehicle (411) is able to take the data corresponding to the minimum volume of data as a basis for leaving a radio range of a first base station (409a) and driving into radio range of a second base station (409b, 409c), and
- a control device (205) for controlling the first base station (409a) in such a way that the first base station (409a) transmits the ascertained minimum volume of data comprising data to the vehicle (411) that is in radio range of the first base station (409a), which means that the vehicle (411) is able to take the data as a basis for leaving the radio range of the first base station (409a) and driving into radio range of the second base station (409b, 409c),
- wherein the minimum volume of data is ascertained on the basis of a respective transmission power of the first (409a) and the second (409b, 409c) base station, the respective transmission powers being ascertained on the basis of a digital transmission power map that indicates what level a respective transmission power of the base stations (305, 409a, 409b, 409c) is at,
- wherein data that the vehicle (411) requires for its journey in the car park from a starting position to a destination position are ascertained, the data of the minimum volume of data being ascertained on the basis of the ascertained data, that is to say that, of these data, only those data that the vehicle (411) requires for its journey from the first (409a) to the second (409b, 409c) base station are transmitted to the vehicle (411),
- wherein the data comprise one or more elements from the following group of data: trajectory data, map data from a digital map of the car park (303, 403), remote control data, object data from mobile and/or static objects situated in the car park (303, 403), landmark data, traffic data and hazard data.

8. Parking system (301, 401) for vehicles (411), comprising:
- a car park (303, 403) within which multiple base stations (305, 409a, 409b, 409c) are arranged, and
- the apparatus (201) according to Claim 7.

9. Computer program, comprising program code for carrying out the method according to one of Claims 1 to 6 when the computer program is executed on a computer.

## Revendications

1. Procédé d'exploitation d'un parc de stationnement (303, 403) à l'intérieur duquel sont disposées plusieurs stations de base (305, 409a, 409b, 409c),
**caractérisé en ce que**
a) une quantité de données minimale de données nécessaires à un véhicule (411) pour son déplacement dans le parc de stationnement (303, 403) est déterminée (101) de telle sorte que sur la base des données correspondant à la quantité de données minimale, le véhicule (411) peut quitter une portée radio d'une première station de base (409a) et se déplacer à portée radio d'une deuxième station de base (409b, 409c),
b) la première station de base (409a) émettant (103) la quantité de données minimale déterminée de données au véhicule (411) se trouvant à portée radio de la première station de base (409a) de sorte que sur la base des données, le véhicule (411) peut quitter la portée radio de la première station de base (409a) et se déplacer à portée radio de la deuxième station de base (409b, 409c),
c) la détermination de la quantité de données minimale étant effectuée sur la base d'une puissance d'émission respective de la première (409a) et de la deuxième station de base (409b, 409c), les puissances d'émission respectives étant déterminées sur la base d'une carte de puissance d'émission numérique qui indique le niveau d'une puissance d'émission respective des stations de base (305, 409a, 409b, 409c),
d) dans lequel des données sont déterminées que le véhicule (411) nécessite pour son déplacement dans le parc de stationnement d'une position de départ à une position cible, les données de la quantité de données minimale étant déterminées sur la base des données déterminées, c'est-à-dire que parmi ces données seules sont envoyées au véhicule (411) des données que le véhicule (411) nécessite pour son déplacement de la première (409a) à la deuxième station de base (409b, 409c),
e) les données comprenant un ou plusieurs éléments du groupe de données suivant : des données de trajectoire, des données cartographiques d'une carte numérique du parc de stationnement (303, 403), des données de télécommande, des données d'objet provenant d'objets mobiles et/ou stationnaires se trouvant dans le parc de stationnement (303, 403), des données de repères, des données de circulation et des données de risques.

2. Procédé selon la revendication 1, dans lequel une vitesse de véhicule du véhicule (411) est adaptée de telle sorte que le véhicule (411) reste à portée radio de la première station de base (409a) jusqu'à ce que les données aient été entièrement envoyées au véhicule (411) .

3. Procédé selon la revendication 2, dans lequel, en réponse à une réception d'un message du véhicule (411) indiquant le niveau de la quantité de données déjà reçue par le véhicule (411), on estime le temps nécessaire pour l'envoi complet des données de la première station de base (409a) au véhicule (411) de sorte que la vitesse de véhicule est adaptée sur la base du temps estimé.

4. Procédé selon la revendication 3, dans lequel l'estimation est effectuée sur la base d'une puissance d'émission de la première station de base (409a) qui est déterminée sur la base d'une carte de puissance d'émission numérique qui indique le niveau d'une puissance d'émission respective des stations de base (305, 409a, 409b, 409c), et/ou sur la base d'un débit de données instantané entre la première station de base (409a) et la deuxième station de base (409b, 409c).

5. Procédé selon l'une quelconque des revendications précédentes, dans lequel, en réponse à une réception d'une puissance de réception mesurée par le véhicule (411) et/ou d'un débit de données mesuré par le véhicule (411), une carte de puissance d'émission numérique est mise à jour qui indique le niveau d'une puissance d'émission respective des stations de base (305, 409a, 409b, 409c).

6. Procédé selon l'une quelconque des revendications précédentes, dans lequel les étapes a) et b) sont effectuées de manière itérative pour d'autres stations de base (305, 409a, 409b, 409c) de sorte que le véhicule (411) peut quitter une portée radio d'une station de base et se déplacer à portée radio d'une autre station de base sur la base des données que ladite une station de base a envoyées au véhicule (411) jusqu'à ce que le véhicule (411) ait atteint une position cible dans le parc de stationnement.

7. Dispositif (201) d'exploitation d'un parc de stationnement (303, 403) à l'intérieur duquel sont disposées plusieurs stations de base (305, 409a, 409b, 409c), **caractérisé par** :
- un processeur (203) qui est réalisé pour déterminer une quantité de données minimale de données nécessaires à un véhicule (411) pour son déplacement dans le parc de stationnement (303, 403) de telle sorte que sur la base des données correspondant à la quantité de données minimale, le véhicule (411) peut quitter une portée radio d'une première station de base (409a) et se déplacer à portée radio d'une deuxième station de base (409b, 409c), et
- un dispositif de commande (205) servant à commander la première station de base (409a) de telle sorte que la première station de base (409a) envoie la quantité de données minimale déterminée de données au véhicule (411) se trouvant à portée radio de la première station de base (409a) de sorte que sur la base des données, le véhicule (411) peut quitter la portée radio de la première station de base (409a) et se déplacer à portée radio de la deuxième station de base (409b, 409c),
- la détermination de la quantité de données minimale étant effectuée sur la base d'une puissance d'émission respective de la première (409a) et de la deuxième station de base (409b, 409c), les puissances d'émission respectives étant déterminées sur la base d'une carte de puissance d'émission numérique qui indique le niveau d'une puissance d'émission respective des stations de base (305, 409a, 409b, 409c),
- dans lequel des données sont déterminées que le véhicule (411) nécessite pour son déplacement dans le parc de stationnement d'une position de départ à une position cible, les données de la quantité de données minimale étant déterminées sur la base des données déterminées, c'est-à-dire que parmi ces données seules sont envoyées au véhicule (411) des données nécessaires à son déplacement de la première (409a) à la deuxième station de base (409b, 409c),
- les données comprenant un ou plusieurs éléments du groupe de données suivant : des données de trajectoire, des données cartographiques d'une carte numérique du parc de stationnement (303, 403), des données de télécommande, des données d'objet d'objets mobiles et/ou stationnaires se trouvant dans le parc de stationnement (303, 403), des données de repères, des données de circulation et des données de risques.

8. Système de stationnement (301, 401) pour des véhicules (411), comprenant :
- un parc de stationnement (303, 403) à l'intérieur duquel sont disposées plusieurs stations de base (305, 409a, 409b, 409c), et
- le dispositif (201) selon la revendication 7.

9. Programme informatique, comprenant du code programme pour exécuter le procédé selon l'une quelconque des revendications 1 à 6 lorsque le programme informatique est exécuté sur un ordinateur.
